# FASCICULE DE BREVET EUROPEEN

(11) **EP 2 081 808 B1**
(45) Date de publication et mention de la délivrance du brevet: **07.12.2011**
(21) Numéro de dépôt: 07858588.2
(22) Date de dépôt: 16.10.2007
(51) Int. Cl.: B60W 20/00, B60W 30/18, B60K 6/52, F16H 61/04, B60W 10/10, B60W 10/08

(54) **PROCEDE ET DISPOSITIF DE COMPENSATION D'INTERRUPTION DU COUPLE FOURNI PAR LE GROUPE MOTOPROPULSEUR D'UN VEHICULE HYBRIDE AU COURS D'UN CHANGEMENT DE VITESSE**
VERFAHREN UND VORRICHTUNG ZUR KOMPENSATION VON DREHMOMENTVERLUST DES ANTRIEBSAGGREGATS EINES HYBRIDFAHRZEUGES WÄHREND EINES GANGWECHSELS
METHOD AND DEVICE FOR COMPENSATING FOR THE BREAK IN TORQUE PROVIDED BY THE POWER PLANT OF A HYBRID VEHICLE DURING A GEAR CHANGE

(30) Priorité: 23.10.2006 FR 0654452
(43) Date de publication de la demande: 29.07.2009
(73) Titulaire: Peugeot Citroën Automobiles Société Anonyme, 78140 Velizy Villacoublay (FR)
(72) Inventeur: CALMELS, David, 78300 Poissy (FR)
(86) Numéro de dépôt international: PCT/FR2007/052162
(87) Numéro de publication internationale: WO 2008/050038

(56) Documents cités:
- DE-A1- 19 919 454
- GB-A- 2 346 124
- US-A1- 2001 003 109
- US-A1- 2002 055 411
- US-A1- 2003 098 185
- US-B1- 6 319 168

## Description

L'invention concerne les véhicules du type comportant une chaîne de traction à groupe motopropulseur (ou GMP) comportant un moteur thermique, une machine électrique couplée au moteur thermique, et une boîte de vitesses mécanique pilotée (BVMP), à rupture de couple, couplés au train avant du véhicule.

Il est connu du document FR 2907380 A1 d'associer à cette chaîne de traction, une chaîne de propulsion électrique couplée au train arrière du véhicule.

Une réserve d'énergie est couplée aux deux chaînes : traction et propulsion.

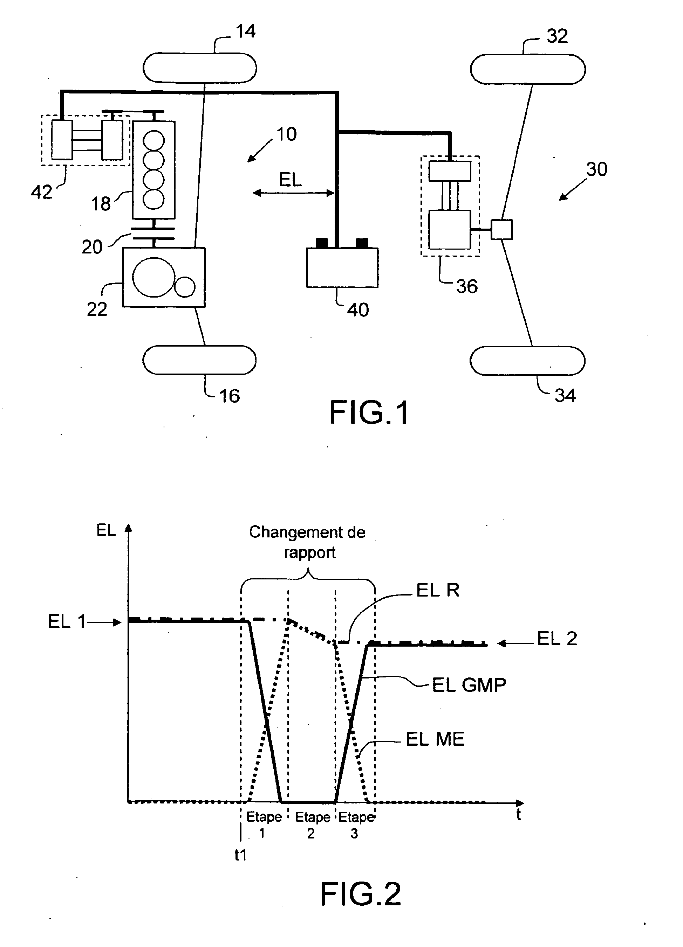

La figure 1 montre un exemple d'architecture d'un tel véhicule qui est par la suite qualifié de véhicule hybride : moteur thermique et machine électrique sur train avant coopérant avec une machine électrique sur le train arrière.

Le véhicule hybride comporte une chaîne de traction conventionnelle 10 comportant deux roues motrices avant respectivement 14 et 16, entraînées en rotation par le couple fourni par le moteur thermique 18 par l'intermédiaire d'un embrayage 20 et d'une boîte de vitesses mécanique pilotée 22. Le véhicule hybride comporte également une chaîne de propulsion électrique 30 sur le train arrière comportant deux roues motrices arrières 32, 34 couplées mécaniquement à une machine électrique 36.

La chaîne de propulsion électrique 30 est couplée à une batterie de stockage d'énergie 40.

Une machine électrique de type alterno-démarreur 42 est couplée mécaniquement au moteur thermique 18 et permet d'assurer son redémarrage (dans un fonctionnement de type « Stop and Sart ») et la recharge de la batterie de stockage d'énergie 40 ou d'alimenter la machine électrique 36 selon les besoins.

La caisse du véhicule est reliée mécaniquement aux trains avant et arrière du véhicule par des dispositifs de suspension non représentés sur la figure.

Dans un tel véhicule hybride de l'état de l'art, représenté à la figure 1, les changements de rapports de vitesses se traduisent par une discontinuité de l'effort longitudinal EL appliqué au véhicule (ou à la caisse du véhicule) et donc de l'accélération du point de vue du conducteur et des passagers du véhicule.

Ce phénomène de trou d'accélération est très mal perçu par les occupants du véhicule. En effet, cette discontinuité d'accélération, lors des changements de rapports de vitesses, induit un mouvement du corps des occupants du véhicule vers l'avant du véhicule, au moment de la disparition du couple par le changement du rapport de vitesses, puis vers l'arrière au moment de l'arrivée du couple lorsqu'un nouveau rapport de vitesses est engagé.

On connaît également du document US2001/003109, une stratégie de compensation de l'interruption, ou rupture du couple moteur, lors d'un changement de rapport de vitesses sous couple conforme au préambule de la revendication 1.

Toutefois, une telle stratégie présente l'inconvénient de dégrader le ressenti du conducteur qui perçoit une augmentation de régime du moteur thermique au moment du changement de rapport de vitesses.

L'invention est basée sur une stratégie de compensation de l'interruption, ou rupture du couple moteur, lors d'un changement de rapport de vitesses sous couple. Pour éviter le désagrément lié à ce ressenti désagréable, l'invention propose un procédé de compensation de perte du couple qui est fourni par le groupe motopropulseur d'un véhicule hybride, conforme à la partie caractérisante de l'objet de la revendication 1.

L'invention résout le problème de ressenti en anticipant le changement de rapport de vitesses pour le faire coïncider avec une étape où le régime du moteur thermique diminue jusqu'à devenir nul. Le conducteur a ainsi l'impression que le régime moteur, et donc le bruit, décroît progressivement à partir du moment où il a décidé de changer de rapport.

Ce comportement se rapproche ainsi de celui d'une chaîne de traction à boîte de vitesses automatique (BVA).

Avantageusement, le couple moteur de compensation est fournit par la machine électrique couplée mécaniquement au train arrière du véhicule.

Dans une réalisation, du procédé selon l'invention, le besoin de changement de rapport de démultiplication de la boîte de vitesses est détecté quand le couple moteur est encore transmis au train avant par le moteur thermique.

Dans une autre réalisation, le besoin de changement du rapport démultiplication de la boîte de vitesses est détecté suite à une action du conducteur du véhicule sur au moins un organe de commande du véhicule.

Dans une autre réalisation, le besoin de changement du rapport démultiplication de la boîte de vitesses est détecté lors d'un dépassement d'un seuil déterminé de vitesse du véhicule.

Dans une autre réalisation, la détection du besoin de changement du rapport de démultiplication de la boîte de vitesse entraîne une réduction progressive du couple moteur fourni au niveau du train avant par le moteur thermique simultanément à une augmentation progressive du couple fourni par la machine électrique au niveau du train arrière de façon à ce que l'effort longitudinal sur la caisse du véhicule reste constant au cours des variations des couples.

Dans une autre réalisation, lorsqu'un nouveau rapport de démultiplication de la boîte de vitesses est engagé, le procédé comporte une étape d'augmentation progressive du couple fourni par le moteur thermique au niveau du train avant simultanément à une réduction progressive du couple fourni par la machine électrique au niveau du train arrière de façon à ce que, à la fin de cette étape, l'effort longitudinal soit celui qui devra être produit sur le train avant par un couple moteur cible prédéterminé.

L'invention concerne aussi un dispositif de compensation pour la mise en oeuvre du procédé de compensation de perte du couple moteur fourni par un groupe motopropulseur d'un véhicule hybride conforme à l'objet de la revendication 6.

L'invention sera mieux comprise par une description détaillée d'un exemple de procédé de compensation selon l'invention en référence aux figures indexées dans lesquelles :
- la figure 1, déjà décrite, représente une architecture simplifiée d'un véhicule hybride ;
- la figure 2 représente des courbes des différents efforts subis par le véhicule hybride utilisant le procédé selon l'invention ; et
- la figure 3, représente l'architecture du véhicule hybride de la figure 1 comportant un dispositif pour la mise en oeuvre du procédé selon l'invention.

En se référant à la figure 1, l'invention consiste à compenser la rupture de l'effort longitudinal EL transmis au véhicule par le train avant, par un effort longitudinal transmis au véhicule par le train arrière électrique lors d'un changement de rapport de vitesses de manière à minimiser la variation de l'accélération longitudinale lors d'un changement de rapport de vitesses.

Une description détaillée des différentes étapes du procédé selon l'invention est effectuée par la suite en partant d'une situation initiale du véhicule jusqu'à une situation finale après un changement de rapport de vitesse de la boîte de vitesses du véhicule en référence à la figure 2.

La figure 2 représente des courbes EL des différents efforts subis par le véhicule en fonction du temps t mettant en oeuvre le procédé selon l'invention.

On part d'une situation initiale pour laquelle le véhicule hybride roule, un rapport de vitesses est engagé dans la boîte de vitesses. Le moteur thermique 18 fournit de la puissance et un couple moteur sur les roues 14, 16 du train avant pour entraîner le véhicule selon la volonté du conducteur (à vitesse constante ou en accélération). L'effort EL subi par la caisse du véhicule est fourni par le moteur thermique représenté par la courbe EL GMP en trait plein de la figure 2.

La machine électrique 36 ne fournit pas de couple au niveau du train arrière du véhicule.

Dans une première étape de transition, on détecte Dt, au temps t1 un besoin de changement de rapport de vitesses, le couple moteur étant encore transmis aux roues 14, 16 du train avant par le moteur thermique 18.

La détection Dt du besoin de changement de rapport de vitesses au temps t1 peut être liée à une action du conducteur, par exemple sur le levier de la boîte de vitesses actionnant le changement du rapport de vitesses ou suite à un dépassement d'un seuil de vitesse du véhicule.

Dans une étape 1 suivante, la détection Dt du besoin de changement du rapport de vitesse entraîne une réduction progressive du couple moteur fourni au niveau du train avant par le moteur thermique 18 et une augmentation progressive du couple fourni par la machine électrique 36 au niveau du train arrière de façon à ce que l'effort longitudinal EL subi par la caisse du véhicule reste constant.

Le couple fourni par le moteur électrique est égal à l'estimation de la réduction de couple fourni par le train avant depuis le début du changement de rapport (dans la limite des performances de la machine électrique 36).

La figure 2 montre, au cours de l'étape 1, la réduction de l'effort longitudinal EL produit par le moteur thermique (courbe EL GMP en trait plein) et l'augmentation de l'effort longitudinal produit par la machine électrique (courbe EL ME, en trait pointillé)

Dans une deuxième étape de transition entre l'étape 1 et une étape 2 suivante, le couple moteur fourni par le moteur thermique 18 au niveau du train avant est nul. Le couple fourni par la machine électrique 36 au niveau du train arrière est équivalent au couple fourni initialement par le moteur (dans la limite des performances de la machine électrique 36)

Dans l'étape 2, on change le rapport de vitesses sans transmission de couple moteur sur le train avant du véhicule.

On ajuste le couple fourni par la machine électrique 36 pour atteindre la valeur de couple cible que devra fournir le moteur thermique 18 sur le train avant du véhicule dans le nouveau rapport de vitesses, lorsque le nouveau rapport aura été engagé.

Dans une troisième étape de transition, entre l'étape 2 et une étape 3 suivante, le nouveau rapport de vitesses est engagé, la machine électrique 36 fournit au niveau du train arrière un couple cible.

Le couple cible est fourni par une consigne cible.

Dans l'étape 3, à la suite de l'étape 2, on augmente progressivement le couple fourni par le moteur thermique 18 au niveau du train avant jusqu'à atteindre la consigne cible et, simultanément, on réduit progressivement le couple fourni par la machine électrique 36 au niveau du train arrière de la valeur de l'estimation de couple fournie par le moteur thermique sur le train avant.

Dans la situation finale, le véhicule hybride roule, le nouveau rapport de vitesses adéquat est engagé et le moteur thermique 18 fournit la puissance nécessaire pour entraîner le véhicule selon la volonté du conducteur. La machine électrique ne fournit plus de couple au niveau du train arrière.

La courbe en trait mixte EL R montre l'effort longitudinal résultant sur l'ensemble des étapes du procédé.

L'effort longitudinal résultant EL R subi par la caisse du véhicule passe sans discontinuité de la valeur de l'effort longitudinal EL1, avant le changement de rapport de vitesses, vers une nouvelle valeur d'effort EL2 après le changement rapport de vitesses.

La machine électrique 36 fournissant le couple (ou l'effort) de compensation pendant le changement de rapport de vitesses est alimentée par la batterie de stockage d'énergie 40 et l'alterno-démarreur 42 couplé mécaniquement au moteur thermique 18.

La machine électrique 36 peut, en outre, être transformée en génératrice qui, entraînée en rotation par les roues du train arrière du véhicule transforme au moins une partie de l'énergie cinétique du véhicule en énergie électrique pour recharger la batterie de stockage 40.

L'invention concerne aussi un dispositif de compensation pour la mise en oeuvre du procédé de compensation de perte du couple moteur fourni par un groupe motopropulseur d'un véhicule hybride tel que représenté à la figure 1.

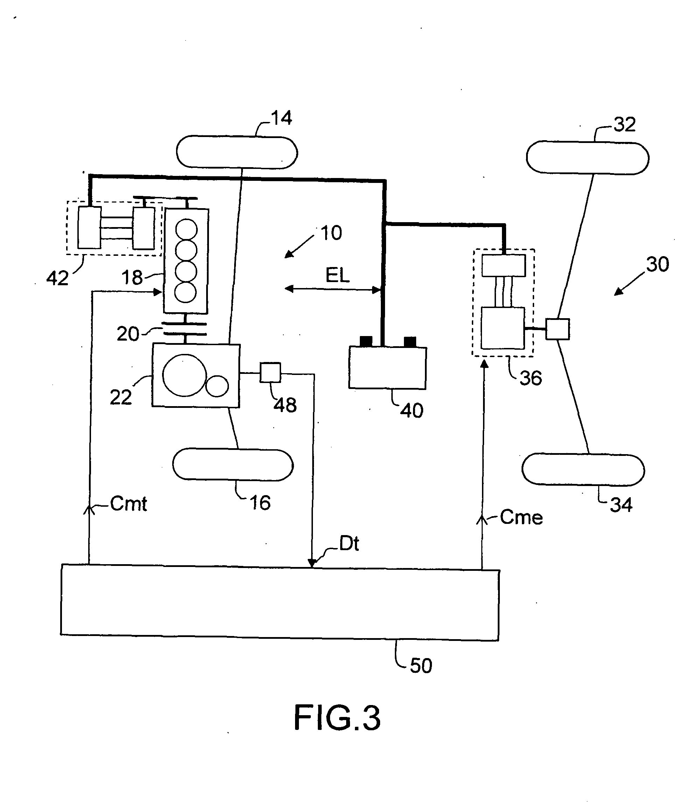

La figure 3, représente une architecture simplifiée du véhicule hybride de la figure 1 comportant le dispositif pour la mise en oeuvre du procédé selon l'invention.

Le dispositif comporte :
- des moyens de détection 48 du besoin d'un changement du rapport de vitesses de la boîte de vitesses,
- des moyens de commande 50 pour coordonner les puissances fournies par le moteur thermique 18 de la chaîne de traction avant 10 et par la machine électrique 36 de la chaîne de traction arrière 30 afin de compenser les pertes de couple moteur en fonction des informations générées par les moyens de détection.

Les moyens de commande 50 sont par exemple réalisés par un calculateur recevant, d'une part, au moins l'information de détection Dt des moyens de détection 48 du besoin de changement de rapport de vitesse et fournissant, d'autre part, une première information Cmt de commande de la puissance du moteur thermique et une deuxième information de commande Cme de la puissance de la machine électrique 36.

L'intérêt de cette invention est d'apporter aux véhicules hybrides avec train arrière électrique, équipés d'un seul embrayage simple et économique, les prestations d'une transmission à passage de rapport sans rupture de couple, prestations assurées, dans les véhicules de l'état de l'art, par des systèmes coûteux et complexes avec au minimum deux embrayages.

## Revendications

1. Procédé de compensation de perte de couple fourni par un groupe motopropulseur d'un véhicule hybride comportant :
- une chaîne de traction (10) destinée à produire un effort longitudinal sur la caisse du véhicule dans la direction du mouvement du véhicule, ayant un train avant, un moteur thermique (18) couplé à une boîte de vitesses mécanique pilotée (22) destinée à transmettre au train avant du véhicule un couple moteur pour différents rapports de démultiplication de la boîte des vitesses, la boîte de vitesses provoquant une interruption du couple moteur lors d'un processus de commutation du rapport de démultiplication de la boîte ;
- une chaîne de propulsion électrique (30) ayant un train arrière, une machine électrique (36) couplée, d'une part, mécaniquement au train arrière (32, 34) du véhicule et, d'autre part, électriquement à une réserve (40) d'énergie électrique également couplée électriquement à une machine électrique (42), elle-même couplée mécaniquement au moteur thermique (18) pour assurer son démarrage,
ledit procédé comportant, lors du changement du rapport de vitesses de la boîte de vitesses, au moins une étape de compensation de la perte du couple moteur sur le train avant du véhicule par un couple moteur de compensation appliqué au train arrière du véhicule, la détection (Dt) d'un besoin de changement du rapport de démultiplication de la boîte de vitesse entraînant une réduction progressive du couple moteur fourni au niveau du train avant par le moteur thermique (18) simultanément à une augmentation progressive du couple fourni par la machine électrique (36) au niveau du train arrière de façon à ce que l'effort longitudinal (EL) sur la caisse du véhicule reste constant au cours des variations des couples, **caractérisé en ce qu'**on change le rapport de démultiplication dans l'intervalle de temps où l'effort longitudinal (EL GMP) produit par le moteur thermique via le train avant est nul ; l'effort longitudinal résultant (EL R) subi par la caisse du véhicule passant sans discontinuité, dans le même intervalle de temps, d'une valeur d'effort longitudinal (EL1) subi par la caisse du véhicule avant changement de rapport, à une nouvelle valeur d'effort (EL2) correspondant à une valeur de couple cible que devra fournir le moteur thermique, sur le train avant, dans le nouveau rapport de démultiplication, lorsque le nouveau rapport aura été engagé.

2. Procédé de compensation selon la revendication 1, **caractérisé en ce qu'**il comporte, lorsqu'un nouveau rapport de démultiplication de la boîte de vitesses est engagé, une étape d'augmentation progressive du couple fourni par le moteur thermique (18) au niveau du train avant simultanément à une réduction progressive du couple fourni par la machine électrique (36) au niveau du train arrière de la valeur de l'estimation de couple fournit par le moteur thermique sur le train avant de façon à ce que, à la fin de cette étape, l'effort longitudinal (EL) soit celui qui devra être produit sur le train avant par un couple moteur cible prédéterminé.

3. Procédé de compensation selon l'une des revendications 1 ou 2, **caractérisé en ce que** le besoin de changement de rapport de démultiplication de la boîte de vitesses est détecté quand le couple moteur est encore transmis au train avant par le moteur thermique (18).

4. Procédé de compensation selon la revendication 3, **caractérisé en ce que** le besoin de changement du rapport démultiplication de la boîte de vitesses est détecté suite à une action du conducteur du véhicule sur au moins un organe de commande du véhicule.

5. Procédé de compensation selon la revendication 3, **caractérisé en ce que** le besoin de changement du rapport démultiplication de la boîte de vitesses est détecté lors d'un dépassement d'un seuil déterminé de vitesse du véhicule.

6. Dispositif de compensation pour la mise en oeuvre du procédé de compensation de perte du couple moteur, selon l'une des revendications précédentes, fourni par un groupe motopropulseur d'un véhicule hybride comportant :
- une chaîne de traction (10) destinée à produire un effort longitudinal sur la caisse du véhicule dans la direction du mouvement du véhicule, ayant un train avant, un moteur thermique (18) couplé à une boîte de vitesses mécanique (22) destinée à transmettre au train avant du véhicule un couplé moteur pour différents rapports de démultiplication de la boîte des vitesses, la boîte de vitesses provoquant une interruption du couple moteur lors d'un processus de commutation du rapport de démultiplication de la boîte ;
- une chaîne de propulsion électrique (30) ayant un train arrière, une machine électrique (36) couplée, d'une part, mécaniquement au train arrière (32, 34) du véhicule et, d'autre part, électriquement à une réserve (40) d'énergie électrique également couplée électriquement à une machine électrique (42) elle-même couplée mécaniquement au moteur thermique (18) pour assurer son démarrage,
**caractérisé en ce qu'**il comporte :
- des moyens de détection (48) du besoin d'un changement du rapport de vitesses de la boîte de vitesses,
- des moyens de commande (50) pour coordonner les puissances fournies par le moteur thermique (18) de la chaîne de traction avant et par la machine électrique de la chaîne de traction arrière afin de compenser les pertes de couple moteur en fonction des informations générées par les moyens de détection (48), et changer le rapport de démultiplication dans l'intervalle de temps où l'effort longitudinal (EL GMP) produit par le moteur thermique via le train avant est nul ; l'effort longitudinal résultant (EL R) subi par la caisse du véhicule passant sans discontinuité, dans le même intervalle de temps, d'une valeur d'effort longitudinal (EL1) subi par la caisse du véhicule avant changement de rapport, à une nouvelle valeur d'effort (EL2) correspondant à une valeur de couple cible que devra fournir le moteur thermique sur le train avant, dans le nouveau rapport de démultiplication, lorsque le nouveau rapport aura été engagé.

## Claims

1. Method for compensating for the loss of torque provided by a power unit of a hybrid vehicle, comprising:
- a drivetrain (10) intended to produce a longitudinal force on the body of the vehicle in the direction of movement of the vehicle, having a front axle assembly, a heat engine (18) coupled to a controlled manual gearbox (22) intended to transmit to the front axle assembly of the vehicle an engine torque for different reduction ratios of the gearbox, the gearbox causing an interruption of the engine torque during a switching process of the reduction ratio of the gearbox;
- an electric propulsion system (30) having a rear axle assembly, an electrical machine (36) coupled, on the one hand, mechanically to the rear axle assembly (32, 34) of the vehicle and, on the other hand, coupled electrically to a reserve (40) of electrical energy, likewise coupled electrically to an electrical machine (42), itself coupled mechanically to the heat engine (18) to ensure its starting up,
the said method comprising, on the change of gear of the gearbox, at least one step of compensating for the loss of engine torque on the front axle assembly of the vehicle by a compensation engine torque applied to the rear axle assembly of the vehicle, the detection (Dt) of a need to change the reduction ratio of the gearbox bringing about a progressive reduction of the engine torque provided at the level of the front axle assembly by the heat engine (18) simultaneously to a progressive increase of the torque provided by the electrical machine (36) at the level of the rear axle assembly such that the longitudinal force (EL) on the body of the vehicle remains constant in the course of the variations of the torques, **characterized in that** the reduction ration is changed in the interval of time where the longitudinal force (EL GMP) produced by the heat engine via the front axle assembly is zero; the resultant longitudinal force (EL R) undergone by the body of the vehicle passing without discontinuity, in the same interval of time, from a longitudinal force value (EL1) undergone by the body of the vehicle before the gear change, to a new force value (EL2) corresponding to a target torque value which the heat engine will provide, on the front axle assembly, in the new reduction ratio, when the new ratio will have been engaged.

2. Method for compensation according to Claim 1, **characterized in that** it comprises, when a new reduction ratio of the gearbox is engaged, a step of progressive increase of the torque provided by the heat engine (18) at the level of the front axle assembly simultaneously to a progressive reduction of the torque provided by the electrical machine (36) at the level of the rear axle assembly of the value of the torque estimate provided by the heat engine on the front axle assembly, such that, at the end of this step, the longitudinal force (EL) is that which will be produced on the front axle assembly by a predetermined target engine torque.

3. Method for compensation according to one of Claims 1 or 2, **characterized in that** the need for a change in reduction ratio of the gearbox is detected when the engine torque is still transmitted to the front axle assembly by the heat engine (18).

4. Method for compensation according to Claim 3, **characterized in that** the need for a change in reduction ratio of the gearbox is detected following an action by the driver of the vehicle on at least one control member of the vehicle.

5. Method for compensation according to Claim 3, **characterized in that** the need for a change in reduction ratio of the gearbox is detected when a specified speed threshold of the vehicle is exceeded.

6. Device for compensation for implementing the method for compensation of loss of the engine torque, according to one of the preceding claims, provided by a power unit of a hybrid vehicle, comprising:
- a drivetrain (10) intended to produce a longitudinal force on the body of the vehicle in the direction of movement of the vehicle in the direction of movement of the vehicle, having a front axle assembly, a heat engine (18) coupled to a manual gearbox (22) intended to transmit to the front axle unit of the vehicle an engine torque for different reduction ratios of the gearbox, the gearbox causing an interruption of the engine torque during a switching process of the reduction ratio of the gearbox;
- an electric propulsion system (30) having a rear axle assembly, an electrical machine (36) coupled, on the one hand, mechanically to the rear axle assembly (32, 34) of the vehicle and, on the other hand, coupled electrically to a reserve (40) of electrical energy, likewise coupled electrically to an electrical machine (42), itself coupled mechanically to the heat engine (18) to ensure its starting up, **characterized in that** it comprises:
- detection means (48) of the need for a change in the gear ratio of the gearbox,
- control means (50) to coordinate the powers provided by the heat engine (18) of the front drivetrain and by the electrical machine of the rear drivetrain, so as to compensate for the losses in engine torque as a function of the information generated by the detection means (48), and to change the reduction ratio in the interval of time where the longitudinal force (EL GMP) produced by the heat engine via the front axle assembly is zero; the resultant longitudinal force (EL R) undergone by the body of the vehicle passing without discontinuity, in the same interval of time, from a longitudinal force value (EL1) undergone by the body of the vehicle before the gear change, to a new force value (EL2) corresponding to a target torque value which the heat engine will provide on the front axle assembly, in the new reduction ratio, when the new ratio will have been engaged.

## Patentansprüche

1. Verfahren zum Kompensieren des Verlusts des Moments, das von einem Antriebsaggregat eines Hybridfahrzeugs geliefert wird, Folgendes aufweisend:
- eine Zuglinie (10), die dazu bestimmt ist, eine Längskraft auf der Karosserie des Fahrzeugs in die Bewegungsrichtung des Fahrzeugs zu erzeugen, mit einer Vorderachse, einem Verbrennungsmotor (18), der mit einem gesteuerten mechanischen Schaltgetriebe (22) gekoppelt ist, das dazu bestimmt ist, ein Antriebsmoment für verschiedene Untersetzungsgänge des Schaltgetriebes auf die Vorderachse zu übertragen, wobei das Schaltgetriebe eine Unterbrechung des Antriebsmoments bei einem Umschaltprozess des Untersetzungsgetriebes des Schaltgetriebes verursacht,
- eine elektrische Antriebslinie (30), die eine Hinterachse, eine elektrische Maschine (36) hat, die einerseits mechanisch mit der Hinterachse (32, 34) des Fahrzeugs gekoppelt ist und, andererseits, elektrisch mit einer Reserve (40) elektrischer Energie gekoppelt ist, die ebenfalls elektrisch mit einer elektrischen Maschine (42) gekoppelt ist, die wiederum mechanisch mit dem Verbrennungsmotor (18) gekoppelt ist, um sein Anlassen sicherzustellen,
wobei das Verfahren beim Gangwechsel des Schaltgetriebes mindestens einen Schritt des Kompensierens des Verlusts des Antriebsmoments auf der Vorderachse des Fahrzeugs durch ein Kompensationsantriebsmoment aufweist, das auf die Hinterachse des Fahrzeugs angelegt wird, wobei das Erfassen (Dt) eines Bedarfs an Untersetzungsgangwechsel des Schaltgetriebes eine allmähliche Verringerung des Antriebsmoments, das auf dem Niveau der Vorderachse von dem Verbrennungsmotor (18) geliefert wird, gleichzeitig mit einer allmählichen Steigerung des Moments, das von der elektrischen Maschine (36) auf dem Niveau der Hinterachse geliefert wird, derart nach sich zieht, dass die Längskraft (EL) auf der Karosserie des Fahrzeugs im Laufe der Variationen der Momente konstant bleibt, **dadurch gekennzeichnet, dass** man den Untersetzungsgang in dem Zeitintervall wechselt, in dem die Längskraft (EL GMP), die von dem Verbrennungsmotor über die Vorderachse erzeugt wird, gleich null ist; wobei die resultierende Längskraft (EL R), die die Karosserie des Fahrzeugs erfährt, unterbrechungslos in dem gleichen Zeitintervall von einem Längskraftwert (EL1), den die Karosserie des Fahrzeugs vor dem Gangwechsel erfährt, auf einen neuen Kraftwert (EL2), der einem Zielmomentwert, den der Verbrennungsmotor auf der Vorderachse in dem neuen Untersetzungsgang liefern muss, übergeht, wenn der neue Gang eingerückt wurde.

2. Verfahren zum Kompensieren nach Anspruch 1, **dadurch gekennzeichnet, dass** es, wenn ein neuer Untersetzungsgang des Schaltgetriebes eingerückt wird, einen Schritt des allmählichen Steigerns des Moments, das von dem Verbrennungsmotor (18) auf dem Niveau der Vorderachse geliefert wird, gleichzeitig mit einer allmählichen Verringerung des Moments, das von der elektrischen Maschine (36) auf dem Niveau der Hinterachse geliefert wird, des Momentschätzungswerts, der von dem Verbrennungsmotor auf der Vorderachse geliefert wird, derart aufweist, dass am Ende dieses Schritts die Längskraft (EL) die ist, die auf der Vorderachse von einem vorbestimmten Antriebsmoment erzeugt werden muss.

3. Verfahren zum Kompensieren nach einem der Ansprüche 1 oder 2, **dadurch gekennzeichnet, dass** der Bedarf an Untersetzungsgangwechsel des Schaltgetriebes erfasst wird, wenn das Antriebsmoment noch von dem Verbrennungsmotor (18) auf die Vorderachse übertragen wird.

4. Verfahren zum Kompensieren nach Anspruch 3, **dadurch gekennzeichnet, dass** der Bedarf an Untersetzungsgangwechsel des Schaltgetriebes im Anschluss an eine Aktion des Fahrers des Fahrzeugs auf mindestens ein Steuerorgan des Fahrzeugs erfasst wird.

5. Verfahren zum Kompensieren nach Anspruch 3, **dadurch gekennzeichnet, dass** der Bedarf an Untersetzungsgangwechsel des Schaltgetriebes bei einem Überschreiten eines bestimmten Geschwindigkeitssollwerts des Fahrzeugs erfasst wird.

6. Vorrichtung zum Kompensieren zum Umsetzen des Verfahrens zum Kompensieren des Verlusts des Antriebsmoments nach einem der vorhergehenden Ansprüche, geliefert von einem Antriebsaggregat eines Hybridfahrzeugs, Folgendes aufweisend:
- eine Zuglinie (10), die dazu bestimmt ist, eine Längskraft auf der Karosserie des Fahrzeugs in die Richtung der Bewegung des Fahrzeugs zu erzeugen, mit einer Vorderachse, einem Verbrennungsmotor (18), der mit einem mechanischen Schaltgetriebe (22) gekoppelt ist, das dazu bestimmt ist, auf die Vorderachse des Fahrzeugs ein Antriebsmoment für verschiedene Untersetzungsgänge des Schaltgetriebes zu übertragen, wobei das Schaltgetriebe eine Unterbrechung des Antriebsmoments bei einem Umschaltprozess des Untersetzungsgangs des Schaltgetriebes verursacht;
- eine elektrische Antriebslinie (30), die eine Hinterachse, eine elektrische Maschine (36) hat, die einerseits mechanisch mit der Hinterachse (32, 34) des Fahrzeugs und, andererseits, elektrisch mit einer Reserve (40) elektrischer Energie gekoppelt ist, die ebenfalls elektrisch mit einer elektrischen Maschine (42) gekoppelt ist, die wiederum mechanisch mit dem Verbrennungsmotor (18) gekoppelt ist, um sein Anlassen sicherzustellen,
**dadurch gekennzeichnet, dass** sie Folgendes aufweist:
- Erfassungsmittel (48) des Bedarfs eines Gangwechsels des Schaltgetriebes,
- Steuermittel (50), um die Leistungen, die von dem Verbrennungsmotor (18) der vorderen Zuglinie und von der elektrischen Maschine der hinteren Zuglinie geliefert werden, zu koordinieren, um die Antriebsmomentverluste in Abhängigkeit von den Informationen zu kompensieren, die von den Erfassungsmitteln (48) erzeugt werden, und den Untersetzungsgang in dem Zeitintervall zu wechseln, in dem die Längskraft (EL GMP), die von dem Verbrennungsmotor über die Vorderachse erzeugt wird, gleich null ist; wobei die resultierende Längskraft (EL R), die die Karosserie des Fahrzeugs erfährt, unterbrechungslos in dem gleichen Zeitintervall von einem Längskraftwert (EL1), den die Karosserie des Fahrzeugs vor dem Gangwechsel erfährt, auf einen neuen Längskraftwert (EL2), der einem Zielmomentwert entspricht, den der Verbrennungsmotor auf der Vorderachse in dem neuen Untersetzungsgang liefern muss, wenn der neue Gang eingerückt wurde, übergeht.
